# EUROPEAN PATENT SPECIFICATION

(11) **EP 3 301 687 B1**
(45) Date of publication and mention of the grant of the patent: **06.11.2019**
(21) Application number: 16191436.1
(22) Date of filing: 29.09.2016
(51) Int. Cl.: H01B 7/295

(54) **A FIRE-RESISTANT CABLE**
EIN FEUERFESTES KABEL
UN CÂBLE RÉSISTANT AU FEU

(43) Date of publication of application: 04.04.2018
(73) Proprietor: Lapp Engineering & Co., 6330 Cham (CH)
(72) Inventor: Riva, Stefano, 25048 Brescia-Edolo (IT); Giancarlo, Lunari, 25048 Brescia-Edolo (IT); Prakash, Mishra, 25048 Brescia-Edolo (IT); Sterli, Luigi, 25048 Brescia-Edolo (IT)

(56) References cited:
- EP-B1- 0 770 259
- WO-A1-2016/128785
- GB-A- 2 448 778
- DATABASE WPI Week 200804 22 November 2007 (2007-11-22) Thomson Scientific, London, GB; AN 2008-A54374 XP002768933, -& JP 2007 305389 A (HITACHI CABLE LTD) 22 November 2007 (2007-11-22)

## Description

The present invention relates to a fire-resistant cable.

Known examples of fire-resistant cables are wrapped with tapes or films of inorganic fire-resistant materials in order to continue to provide electrical insulation surrounding the electrical conductor where the usual layers of organic polymer insulation have been melted or burnt away from the cable. Of various known inorganic fire-resistant wrappings, mica tape is generally preferred, and for convenience the following description will therefore refer to mica wrapping while not restricting the present invention to that material.

One or several mica tapes are typically wrapped around one or several conductors with an overlap of 50% or more (of tape width) to maintain protection when the wrapped conductor is flexed, since the overlaps tend to open on flexing. The large overlap leads to an inhomogeneous surface which often shows wrinkles, leading to an inconstant performance during fire exposure. The production speed is also limited, due to the tight wrapping required for achieving the high overlap between subsequent turns.

WO2016/128785 discloses a fire resistant cable with a conductor and a couple of mica tapes surrounding the conductor. Each of the mica tapes includes a mica layer attached to a backing layer.

EP0770259B1 discloses a fire resistant cable with an underlayer of fire-resistant material over which is spirally wrapped an electrically insulating covering tape of an inorganic fire-resistant material with adjacent turns of the tape overlapping one another by less than 5%, preferably less than 3%, of the tape width. Such a low overlap is difficult to achieve while still guaranteeing that there is a clear overlap between the turns, making production slow and error-prone. If there is no overlap, either due to production issues or bending of the cable, the cable will fail much faster during fire exposure.

The problem of the present invention is to provide an improved fire-resistant cable.

More particularly, the cable shall maintain its properties during flexing.

Further, the cable shall be easy and fast to be manufactured. The problem is solved by a fire-resistant cable according to claim 1. Further preferred embodiments are subject of the dependent claims.

The fire-resistant cable of the present invention comprises at least one conductor. The conductor is preferably made from stranded copper and/or aluminium wires or a conductive polymer or a superconductor or a carbon steel conductor or a metal alloy. A cable longitudinal axis is running along the long axis of the cable. A first fire-protection layer is formed around and enclosing the conductor, by tightly wrapped tape turns of a tape-shaped ribbon. A second fire-protection layer is formed by tightly wrapped tape turns of a tape-shaped ribbon around the first fire-protection tape and fully encloses the first fire-protection tape. A conductor insulation layer encloses the second fire-protection layer and electrically insulates the conductor. The conductor insulation layer is preferably made from an insulating polymeric material. At least one outer jacket, preferably formed from an insulating polymeric material surrounds the conductor insulation layer. In other embodiments of the present invention, strength layers (e.g. made from an aramid braid) and/or electric screening layer (e.g. made from an electrically conductive braid from conducting wires) are positioned between any of the other layers of the cable. According to the present invention, the first fire-protection layer and the second fire-protection layer are formed from tape turns which are wrapped in opposing directions with respect to the cable longitudinal axis. Wrapping the first and second fire-protection layer in opposing direction reduces the roughness of the total fire-protection layer and reduces opening of gaps between subsequent turns when bending the cable.

In a preferred embodiment, the first and/or second fire-protection layers comprise mica tape. Preferably, the tape width is between 0.3cm and 5cm. The tape width is preferably adjusted to the diameter of the conductor.

In the present invention, the overlap between subsequent tape turns of the first fire-resistant layer is between 20% and 5%, preferably between 10% and 5%. The overlap between subsequent tape turns of the second fire-resistant layer is between 20% and 5%, preferably between 10% and 5%. In a particularly preferred embodiment of the present invention, the overlap (in percent) between the tape turns of the first fire-resistant layer is at least almost equal to the overlap (in percent) between the tape turns of the second fire-resistant layer. A low overlap between subsequent turns reduces material cost. At the same time, the overlap is large enough to allow fast and reliable processing.

According to another aspect of the present invention, the fire-resistant cable further comprises one or more electromagnetic shielding layers and/or at least one additional polymeric layer.

In a preferred embodiment, the first tape wrapping angle between the first fire-resistant layer and the cable longitudinal axis is between 20° and 85°, preferably between 30° and 80°, most preferred between 40° and 75° and/or the second tape wrapping angle between the tape turns of the second fire-resistant layer and the cable longitudinal axis is between 20° and 85°, preferably between 30° and 80°, most preferred between 40° and 75°.

In a particularly preferred embodiment, the absolute value of the first tape wrapping angle is smaller than the absolute value of the second tape wrapping angle.

In a further preferred embodiment of the present invention, the surface roughness of the second fire-resistant layer is less than 20%, preferably less than 15% of the total diameter of the fire-resistant cable.

According to another embodiment of the present invention, the thickness of the first fire-resistant layer is less than 2mm, preferably less than 1mm, more preferred less than 0.5mm and/or the thickness of the second fire-resistant layer is less than 2mm, preferably less than 1mm, more preferred less than 0.5mm.

In a further particularly preferred embodiment, the fire-resistant cable comprises at least one additional fire-resistant layer between the first fire-resistant layer and the second fire-resistant layer and/or underneath the first fire-resistant layer and/or on top of the second fire-resistant layer. The at least one additional fire-resistant layer is preferably formed from tightly wrapped mica tape turns with the tape turns preferably overlapping each other.

A fire-resistant cable according to the present invention may be produced by the following method.

The method comprises the following steps:
(a) a first fire-resistant layer (3A) is formed on a conductor (1) by wrapping a tape-like film around said conductor (1) in a first direction with respect to the cable longitudinal axis (LA);
(b) A second fire-resistant layer is formed on the first fire-resistant layer by wrapping a tape-like film, preferably a mica tape, around the first fire-resistant layer. The wrapping is performed rotationally in the rotational direction opposite to the wrapping direction of the first fire-resistant layer;
(c) at least one conductor isolation layer is extruded onto the second fire-resistant layer ;
(d) At least one outer jacket is formed around the conductor insulation layer, preferably by extrusion of a polymeric material.

In the method, the first fire-resistant layer and the second fire-resistant layer are wrapped in a way that subsequent tape turns overlap each other by about 5% to 20%, preferably by about 5% to 10%.

The wrapping of the first fire-resistant layer and the wrapping of the second fire-resistant layer are performed in a combined fabrication step on a single wrapping machine. Preferably all fabrication steps are performed on a single fabrication line.

The present invention will be further described by way of example only, with reference to the accompanying drawings, wherein:
- Fig. 1a: Schematically depicts a cross-sectional view of a fire-resistant cable 10 in accordance with one embodiment of the present invention;
- Fig. 1b: Schematically depicts a cross-sectional view of a fire-resistant cable 10 in accordance with a further embodiment of the present invention, comprising three isolated conductors;
- Fig. 2a: Schematically depicts a fire-resistant cable 10 according to the first embodiment;
- Fig. 2b: Schematically depicts the first fire-resistant layer 3A of the cable from Fig. 2a.

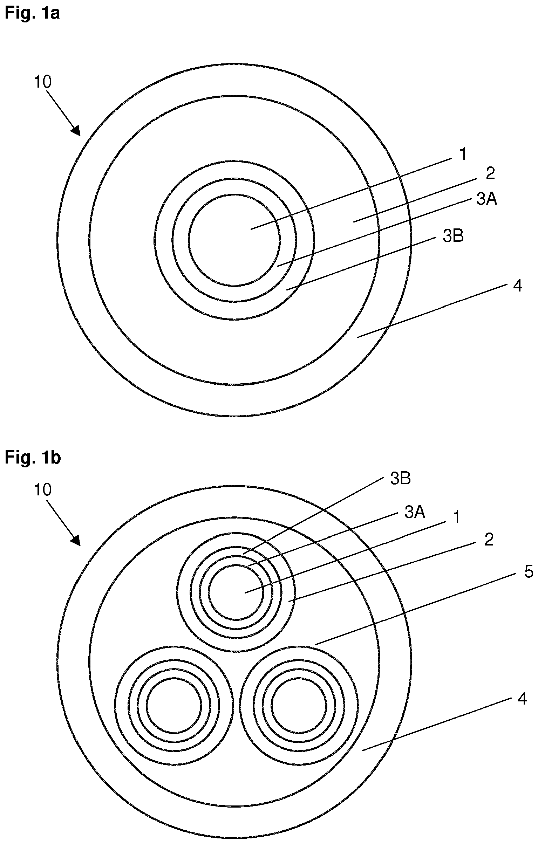

Figure 1a schematically shows a fire-resistant cable 10 with a conductor 1. The conductor is surrounded by a first fire-resistant layer 3A and a second fire-resistant layer 3B. These two layers 3A, 3B are thin compared to the other layers in the cable 10. A conductor insulation layer 2 surrounds the second fire-resistant layer 3B. To protect the cable from external mechanical and chemical stress, an outer jacket 4 encloses the aforementioned components. Further layers, e.g. for improving the mechanical strength of the cable or for electromagnetic screening, can be positioned between any two layers of the cable.

Figure 1b schematically shows a second embodiment of a fire-resistant cable 10. Three conductors 1 are each surrounded by a first fire-resistant layer 3A and a second fire-resistant layer 3B and electrically insulated by a conductor insulation layer 2. The two layers 3A, 3B are thin compared to the other layers in the cable 10. The three insulated conductors 1 are grouped together by an inner layer 5.. To protect the cable from external mechanical and chemical stress, an outer jacket 4 encloses the aforementioned components. Further layers, e.g. for improving the mechanical strength of the cable or for electromagnetic screening, can be positioned between any two layers of the cable.

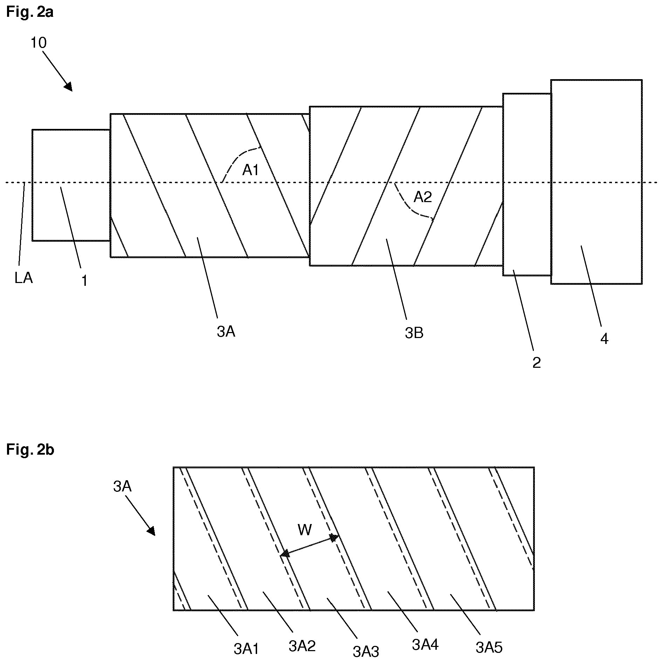

Figure 2a schematically shows the fire-resistant cable 10 from Fig. 1a with some of the layers partially exposed. A cable longitudinal axis LA is running through the centre of the cable in the longitudinal direction. At least one conductor 1 is surrounded by a first fire-protection layer 3A which is formed around the conductor 1 , by wrapping a tape-like ribbon with a wrapping angle A1 with respect to the longitudinal axis LA in a first rotational direction. A second fire-protection layer 3B is formed around the first fire-protection layer 3A by wrapping a tape-like ribbon with a wrapping angle A2 with respect to the longitudinal axis LA in a rotational direction opposite to the wrapping direction of the first fire-protection layer 3A. A conductor insulation layer 2 surrounds the second fire-protection layer 3B. An outer jacket 4 encloses the aforementioned layers.

Figure 2b schematically shows the first fire-resistant layer 3A of the cable 10 from Fig. 2a. The fire-resistant layer 3A is formed from a series of consecutive tape turns 3A1, 3A2, 3A3,... of a tape with width W. The tape turns partially overlap each other as visualized by the dotted lines which represent the covered end of the preceding tape turn 3A1, 3A2, 3A3,... .

### List of reference signs

- 1: Conductor
- 2: Conductor insulation layer
- 3A: First fire-protection layer
- 3A1, 3A2, 3A3...: Tape turns
- 3B: Second fire-protection layer
- 3B1, 3B2, 3B3...: Tape turns
- 4: Outer jacket
- 5: Inner layer
- 10: Cable
- A1: First tape wrapping angle
- A2: Second tape wrapping angle
- W: Tape width
- LA: Cable longitudinal axis

## Claims

1. A fire-resistant cable (10) with a cable longitudinal axis (LA), comprising:
a conductor (1);
a first fire-protection layer (3A) formed by tightly wrapped tape turns (3A1, 3A2, 3A3,...) around said conductor (1) and enclosing said conductor (1);
a second fire-protection layer (3B) formed by tightly wrapped tape turns (3B1, 3B2, 3B3,...) around said first fire-protection tape (3A) and enclosing said first fire-protection tape (3A);
a conductor insulation layer (2) enclosing said second fire-protection layer (3B);
an outer jacket (4) surrounding said conductor insulation layer (2),
the first fire-protection layer (3A) and the second fire-protection layer (3B) being formed from tape turns (3A1, 3A2, 3A3,...; 3B1, 3B2, 3B3,...) wrapped in opposing directions with respect to the cable longitudinal axis (LA), **characterized in that** the overlap between subsequent tape turns (3A1, 3A2, 3A3,...) of the first fire-resistant layer (3A) is between 20% and 5%, preferably between 10% and 5% and overlap between subsequent tape turns (3B1, 3B2, 3B3,...) of the second fire-resistant layer (3B) is between 20% and 5%, preferably between 10% and 5%.

2. A fire-resistant cable (10) according to claim 1, wherein the first and/or the second fire-protection layer (3A, 3B) comprises a mica tape.

3. A fire-resistant cable (10) according to claim 1 or 2, wherein the width (W) of the tape for the tape turns (3A1, 3A2, 3A3,...; 3B1, 3B2, 3B3,...) is between 0.3cm and 5cm.

4. A fire-resistant cable (10) according to claim 1, wherein the overlap between the tape turns (3A1, 3A2, 3A3,...) of the first fire-resistant layer (3A) and the overlap between the tape turns (3B1, 3B2, 3B3,...) of the second fire-resistant layer (3B) is at least almost equal.

5. A fire-resistant cable (10) according to one or more of the preceding claims, further comprising an electromagnetic shielding layer and/or at least one additional polymeric layer.

6. A fire-resistant cable (10) according to one or more of the preceding claims, wherein the first tape wrapping angle (A1) between the tape turns (3A1, 3A2, 3A3,...) of the first fire-resistant layer (3A) and the cable longitudinal axis (LA) is between 20° and 85°, preferably between 30° and 80°, most preferred between 40° and 75° and/or the second tape wrapping angle (A2) between the tape turns (3B1, 3B2, 3B3,...) of the second fire-resistant layer (3A) and the cable longitudinal axis (LA) is between 20° and 85°, preferably between 30° and 80°, most preferred between 40° and 75°.

7. A fire-resistant cable (10) according to claim 6, wherein the absolute value of the first tape wrapping angle (A1) is smaller than the absolute value of the second tape wrapping angle (A2).

8. A fire-resistant cable (10) according one or more of the preceding claims, wherein the surface roughness of the second fire-resistant layer (3B) is less than 20%, preferably less than 15% of the total diameter of the fire-resistant cable (10).

9. A fire-resistant cable (10) according to one or more of the preceding claims, wherein the thickness of the first fire-resistant layer (3A) is less than 2mm, preferably less than 1mm, more preferred less than 0.5mm and/or the thickness of the second fire-resistant layer (3B) is less than 2mm, preferably less than 1mm, more preferred less than 0.5mm.

10. A fire-resistant cable (10) according to one or more of the preceding claims, further comprising at least one additional fire-resistant layer between the first fire-resistant layer (3A) and the second fire-resistant layer (3B), said additional fire-resistant layer being preferably formed by tightly wrapped mica tape turns, with the tape turns preferably overlapping each other.

## Patentansprüche

1. Feuerbeständiges Kabel (10) mit einer Kabellängsachse (LA), umfassend:
einen Leiter (1);
eine erste Brandschutzschicht (3A), die durch dicht gewickelte Bandwindungen (3A1, 3A2, 3A3, ...) um den Leiter (1) gebildet ist und den Leiter (1) umschließt;
eine zweite Brandschutzschicht (3B), die durch dicht gewickelte Bandwindungen (3B1, 3B2, 3B3, ...) um das erste Brandschutzband (3A) herum gebildet ist und das erste Brandschutzband (3A) umschließt;
eine Leiterisolationsschicht (2), die die zweite Brandschutzschicht (3B) umgibt;
einen die Leiterisolationsschicht (2) umgebenden Außenmantel (4),
wobei die erste Brandschutzschicht (3A) und die zweite Brandschutzschicht (3B) Bandwindungen (3A1, 3A2, 3A3, ...; 3B1, 3B2, 3B3, ...) gebildet sind, welche bezüglich der Kabellängsachse (LA) entgegengesetzt gewickelt sind, **dadurch gekennzeichnet, dass** die Überlappung zwischen nachfolgenden Bandwindungen (3A1, 3A2, 3A3, ...) der ersten feuerfesten Schicht (3A) zwischen 20% und 5% liegt, vorzugsweise zwischen 10% und 5% und dass die Überlappung zwischen nachfolgenden Bandwindungen (3B1, 3B2, 3B3, ...) der zweiten feuerfesten Schicht (3B) zwischen 20% und 5% liegt, vorzugsweise zwischen 10% und 5%.

2. Feuerbeständiges Kabel (10) nach Anspruch 1, wobei die erste und / oder die zweite Brandschutzschicht (3A, 3B) ein Glimmerband umfasst.

3. Feuerbeständiges Kabel (10) nach Anspruch 1 oder 2, wobei die Breite (W) des Bandes (3A1, 3A2, 3A3,...; 3B1, 3B2, 3B3, ...) zwischen 0,3 cm und 5 cm liegt.

4. Feuerbeständiges Kabel (10) nach Anspruch 1, wobei die Überlappung zwischen den Bandwindungen (3A1, 3A2, 3A3, ...) der ersten Feuerbeständigkeitsschicht (3A) und die Überlappung zwischen den Bandwindungen (3B1, 3B2, 3B3, ...) der zweiten Brandschutzschicht (3B) mindestens nahezu gleich sind.

5. Feuerbeständiges Kabel (10) nach einem oder mehreren der vorhergehenden Ansprüche, ferner umfassend eine elektromagnetische Abschirmschicht und / oder mindestens eine zusätzliche Polymerschicht.

6. Feuerfestes Kabel (10) nach einem oder mehreren der vorhergehenden Ansprüche, wobei der erste Bandwickelwinkel (A1) zwischen den Bandwindungen (3A1, 3A2, 3A3, ...) der ersten feuerfesten Schicht (3A) und der Kabellängsachse (LA) zwischen 20° und 85° liegt, vorzugsweise zwischen 30° und 80°, am meisten bevorzugt zwischen 40 ° und 75 ° und / oder der zweite Bandwickelwinkel (A2) zwischen den Bandwindungen (3B1, 3B2, 3B3, ...) der zweiten Brandschutzschicht (3A) und der Kabellängsachse (LA) zwischen 20° und 85° liegt, vorzugsweise zwischen 30° und 80°, am meisten bevorzugt zwischen 40° und 75°.

7. Feuerbeständiges Kabel (10) nach Anspruch 7, wobei der Absolutwert des ersten Bandwickelwinkels (A1) kleiner als der Absolutwert des zweiten Bandwickelwinkels (A2) ist.

8. Feuerfestes Kabel (10) nach einem oder mehreren der vorhergehenden Ansprüche, wobei die Oberflächenrauheit der zweiten feuerfesten Schicht (3B) weniger als 20%, vorzugsweise weniger als 15% des Gesamtdurchmessers des feuerfesten Kabels beträgt. widerstandsfähiges Kabel (10).

9. Feuerfestes Kabel (10) nach einem oder mehreren der vorhergehenden Ansprüche, wobei die Dicke der ersten feuerfesten Schicht (3A) weniger als 2 mm, vorzugsweise weniger als 1 mm, bevorzugter weniger als 0,5 mm und / oder weniger beträgt Die Dicke der zweiten feuerfesten Schicht (3B) beträgt weniger als 2 mm, vorzugsweise weniger als 1 mm, bevorzugter weniger als 0,5 mm.

10. Feuerbeständiges Kabel (10) nach einem oder mehreren der vorhergehenden Ansprüche, das ferner mindestens eine zusätzliche Feuerbeständigkeitsschicht zwischen der ersten Feuerbeständigkeitsschicht (3A) und der zweiten Feuerbeständigkeitsschicht (3B) aufweist Eine zusätzliche feuerfeste Schicht wird vorzugsweise durch dicht gewickelte Glimmerbandwindungen gebildet, wobei sich die Bandwindungen vorzugsweise überlappen.

## Revendications

1. Câble résistant au feu (10) avec un axe longitudinal de câble (LA), comprenant:
un conducteur (1);
une première couche de protection contre le feu (3A) formée par des spires de bande (3A1, 3A2, 3A3, ...) étroitement enroulées autour dudit conducteur (1) et entourant ledit conducteur (1);
une deuxième couche de protection contre le feu (3B) formée par des spires de bande enroulées étroitement (3B1, 3B2, 3B3, ...) autour de ladite première bande de protection contre le feu (3A) et entourant ladite première bande de protection contre le feu (3A);
une couche d'isolation de conducteur (2) entourant ladite seconde couche de protection contre le feu (3B);
une gaine extérieure (4) entourant ladite couche d'isolation de conducteur (2),
la première couche de protection contre le feu (3A) et la seconde couche de protection contre le feu (3B) sont formées à partir de spires de bande (3A1, 3A2, 3A3 ,...; 3B1, 3B2, 3B3,...) enveloppés dans des directions opposées par rapport à l'axe longitudinal du câble (LA), **caractérisée en ce que** le chevauchement entre les tours de bande suivants (3A1, 3A2, 3A3,...) de la première couche résistant au feu (3A) est compris entre 20% et 5%, de préférence entre 10% et 5% et le chevauchement entre les tours de bande suivants (3B1, 3B2, 3B3, ...) de la deuxième couche résistant au feu (3B) est compris entre 20% et 5%, de préférence entre 10% et 5%.

2. Câble résistant au feu (10) selon la revendication 1, dans lequel la première et / ou la seconde couche de protection contre le feu (3A, 3B) comprend un ruban de mica.

3. Câble résistant au feu (10) selon la revendication 1 ou 2, dans lequel la largeur (W) de la bande pour les tours de bande (3A1, 3A2, 3A3,...;3B1, 3B2, 3B3,...) est compris entre 0,3cm et 5cm.

4. Câble résistant au feu (10) selon la revendication 1, dans lequel le chevauchement entre les spires de bande (3A1, 3A2, 3A3, ...) de la première couche ignifuge (3A) et le chevauchement entre les spires de bande (3B1, 3B2, 3B3, ...) de la deuxième couche résistant au feu (3B) est au moins presque égale.

5. Câble résistant au feu (10) selon une ou plusieurs des revendications précédentes, comprenant en outre une couche de blindage électromagnétique et / ou au moins une couche polymérique supplémentaire.

6. Câble résistant au feu (10) selon une ou plusieurs des revendications précédentes, dans lequel le premier angle d'enroulement de la bande (A1)entre les spires de la bande (3A1, 3A2, 3A3, ...) de la première couche résistant au feu (3A) et l'axe longitudinal du câble (LA) est compris entre 20 ° et 85 °, de préférence entre 30 ° et 80 °, de préférence entre 40 ° et 75 ° et / ou le deuxième angle d'enroulement de la bande (A2) entre les spires de la bande (3B1, 3B2, 3B3, ...) de la deuxième couche résistant au feu (3A) et de l'axe longitudinal du câble (LA) est compris entre 20 ° et 85 °, de préférence entre 30 ° et 80 °, de manière préférée entre 40 ° et 75 °.

7. Câble résistant au feu (10) selon la revendication 6, dans lequel la valeur absolue du premier angle d'enroulement de bande (A1) est inférieur à la valeur absolue du deuxième angle d'enroulement de bande (A2).

8. Câble résistant au feu (10) selon une ou plusieurs des revendications précédentes, dans lequel la rugosité de surface de la seconde couche résistant au feu (3B) est inférieure à 20%, de préférence inférieure à 15% du diamètre total du câble résistant au feu (10).

9. Câble résistant au feu (10) selon une ou plusieurs des revendications précédentes, dans lequel l'épaisseur de la première couche résistant au feu (3A) est inférieure à 2 mm, de préférence inférieure à 1 mm, de manière davantage préférée inférieure à 0,5 mm et / ou l'épaisseur de la seconde couche résistant au feu (3B) est inférieure à 2 mm, de préférence inférieure à 1 mm, de manière préférée inférieure à 0,5 mm.

10. Câble résistant au feu (10) selon une ou plusieurs des revendications précédentes, comprenant en outre au moins une couche supplémentaire résistant au feu entre la première couche résistant au feu (3A) et la seconde couche résistant au feu (3B), ladite une couche supplémentaire résistant au feu étant de préférence formée par des tours de bande de mica étroitement enroulés, les tours de bande se chevauchant de préférence.
